# EUROPEAN PATENT SPECIFICATION

(11) **EP 2 017 475 B1**
(45) Date of publication and mention of the grant of the patent: **05.01.2011**
(21) Application number: 07110377.4
(22) Date of filing: 15.06.2007
(51) Int. Cl.: F03G 3/00

(54) **Method and device for generating a force vector**
Verfahren und Vorrichtung zur Erzeugung eines Kraftvektors
Procédé et dispositif pour générer un vecteur force

(43) Date of publication of application: 21.01.2009
(73) Proprietor: Kei International N.V., Curaçao (AN)
(72) Inventor: Siriphant, Aroon Johannus, 2181 RK Hillegom (NL)
(74) Representative: van Westenbrugge, Andries

(56) References cited:
- WO-A-01/55592
- WO-A-90/05242
- WO-A-94/21916
- DE-A1- 4 312 188
- DE-A1- 19 750 235
- US-A1- 2006 123 937

## Description

The invention is related to a method for generating a force vector, comprising the steps of:
- providing at least a first mass and a second mass,
- making the first mass rotate around an axis of rotation,
- changing the distance between the first mass and the axis of rotation between two extreme positions while rotating the first mass,
- making the second mass move around an axis of rotation,
- changing the distance between the second mass and the axis of rotation between extreme positions while rotating the second mass,
- making the masses move in opposite direction with respect to each other,
- subjecting the masses to a deceleration phase and a subsequent acceleration phase while changing the direction of movement of said masses between the extreme positions,
- making each acceleration phase of said masses directly adjoin a subsequent decelerating phase.

Such a method is disclosed in US 2006/0123937, which is considered as the closest prior art to the subject-matter of claim 1. Said prior art method is carried out by a means of a device comprising a housing which supports a rotatable central shaft. The shaft carries a number of radially extending bars, onto which masses are movable in radial direction. The masses are compelled to travel according to circular arcs. Depending on the eccentricity of the central shaft and the circular arcs, a force vector is generated upon rotation of the masses.

Another method is disclosed in United States patent 4.261.212. According to said United States patent, this method is carried out by means of a so-called unidirectional force generator, which may be used to propel a vehicle or other body in one direction. Also, this unidirectional force generator may serve to generate a force. According to an important aspect of this unidirectional force generator, masses are applied which are carried by endless chains or belts. These chains or belts move uniformly and continuously around two axes. Thereby, the distance of these masses with respect to a rotation centre is varied, whereby the unidirectional force is obtained upon rotating these masses in synchronism with the changing distances of these masses to the rotation centre.

When seen in axial direction with respect to the centre of rotation, the masses carried by the chains or belts are decelerated in axial direction as soon as the chains or belts in question are starting to turn around the axes near the locations of extreme positions with extreme distance to the rotation centre. After the masses have been decelerated to a velocity equal to zero in radial direction, they are accelerated in opposite direction. Subsequently, the chains or belts reach the straight part which extends towards the other axis, over which straight part the masses are moving with a constant velocity, that is without being subjected to a deceleration or to an acceleration in radial direction.

As a result of the uniform movement of the chains or belts, the displacement of the masses with respect to the centre of rotation is thus generally of a constant velocity. This means that a certain amount of time is required in order to displace these masses between the extreme positions with respect to the centre of rotation. However, the speed of this radial mass displacement has a great influence on the effectiveness of the force generator. In general, a relatively long period of time for displacing the masses between the extreme positions, has a negative influence on the effectiveness.

The object of the invention is therefore to provide a method for generating a force vector which is more effective than the prior art method described before. Said object is achieved by the step of making the masses move towards and from the axis of rotation by means of a crank/drive shaft mechanism.

According to the invention, the time period for travelling between the extreme positions of the masses with respect to the rotation centre is decreased by making the masses accelerate over the paths which stretch between these maximum and minimum distances. Similarly, after reaching a relatively high speed over these paths, the masses in question are subsequently the decelerated. As a result of the acceleration and subsequent directly adjoining deceleration phases of the masses over these paths, a relatively short travelling time is obtained between the extreme positions. Thus, said masses can be brought very quickly in the desired maximum position over the part of the rotational paths thereof which provides the desired force vector, while at the same time they can be brought very quickly in the desired minimum position over the part of the rotational paths so as to detract as little as possible from the desired force vector.

The method according to the invention can be carried out in many different ways; for instance the masses can be rotated around separate rotational axes which are at a distance from each other. Preferably however, the method according to the invention comprises the step of making the axes of rotation of the first and second masses coincide. Furthermore, it is preferred that the masses move according to a path which intersects the axis of rotation. Most preferably, the masses move according to paths of similar shape. Also, it is preferred that the masses move according to paths of similar dimensions.

A crank/drive shaft mechanism can be mechanically coupled the rotation drive of the drive system for making the masses rotate about the axis of rotation, whereby a well synchronised system is established. By means of the crank/drive shaft mechanism, the masses can be guided over a guide member which extends radially with respect to the axis of rotation. Such guide member can for instance be carried out as an axially extending rod or a pair of axially extending rods over which mass members can slide.

The invention is furthermore related to a device for generating a force vector according to the method described before, comprising a main frame, at least two inertia units which are rotatably supported with respect to the main frame, as well as main drive means for rotating the inertia units, each inertia unit comprising a subframe, a mass and auxiliary drive means for displacing the masses between extreme positions, wherein the auxiliary drive means are carried out for subjecting the masses to at least one accelerating phase and at least one subsequent decelerating phase which directly adjoins the at least one accelerating phase.

Such a device is disclosed in US 2006/0123937 as well. According to the invention, the main frame comprises fixed auxiliary gear wheels and the inertia units each comprise a rotatable gear wheel engaging a respective fixed gear wheel of the main frame, a respective crank being connected to said rotatable gear wheels, a respective mass being drivingly connected to a corresponding crank by means of a drive shaft.

The inertia units to be rotated with respect to the axis of rotation in several ways. For instance, the inertia units can each have a separate drive, which is synchronised with the auxiliary drive thereof. Preferably however, each inertia unit is provided with a respective driven gear wheel, which driven gear wheels are coaxial with respect to the common axis of rotation, a drive source being provided which is drivingly connected to a drive gear wheel the axis of rotation of which is perpendicular to the common axis of rotation, said drive gear wheel engaging both driven gear wheels. In this preferred embodiment, both inertia units are driven by a common single drive source.

The main frame comprises fixed auxiliary gear wheels and the inertia units each comprise a rotatable gear wheel engaging a respective fixed gear wheel of the main frame, a respective crank being connected to said rotatable gear wheels, a respective mass being drivingly connected to a corresponding crank by means of a drive shaft. In this way, the radial movement of the masses is directly synchronised with the rotational movements thereof. Preferably, each inertia unit comprises a guide member which extends radially with respect to the axis of rotation, each mass being supported displaceably by said guide means.

With the aim of providing a steady, smooth force vector which lacks strong variations, preferably multiple sets of two inertia units each are provided. In this connection, these sets may have a common axis of rotation. Alternatively of course, such sets may have spaced, parallel axes of rotation.

The invention will now be further described with reference to an embodiment as shown in the drawings.
Figure 1 shows a view in perspective of a device according to the invention.

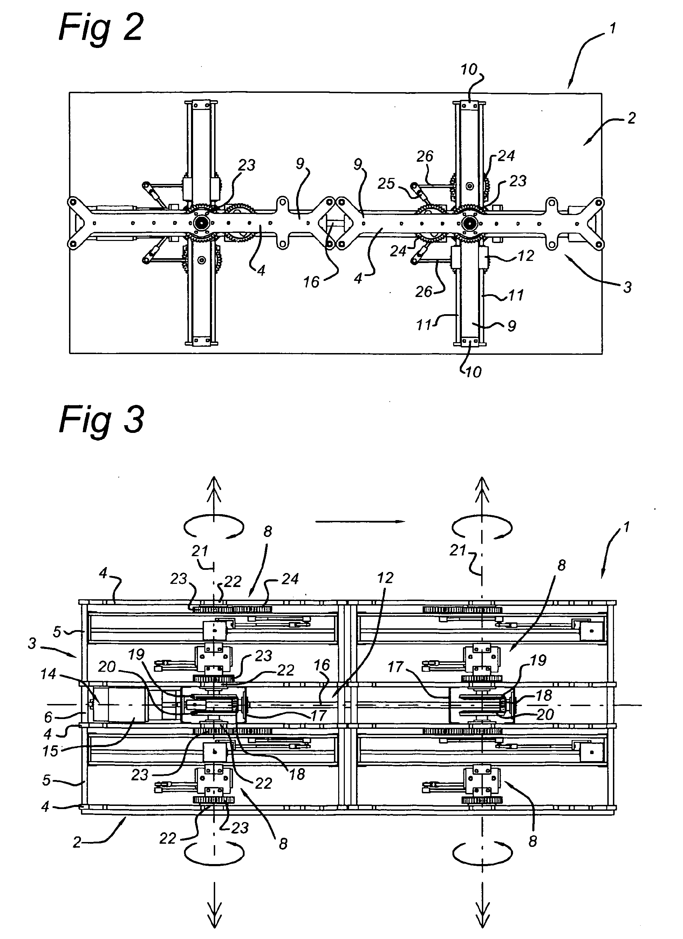

Figure 2 shows a top view of the device according to figure 1.
Figure 3 shows a side view of the device according to figure 1.
Figure 4 shows an end view of the device according to figure 1.
Figure 5 shows a detail of a crank/drive shaft mechanism.
Figure 6 shows a graph containing the path of the force vector.
Figures 7a-h show the force vector at different positions along the path of figure 6, divided in intervals of 45°.
Figure 8 shows a graph giving several variables as a function of the rotation angle for a set of two interconnected inertia units.
Figure 9 shows a graph giving the forces of four inertia units of the device according to figure 1 as a function of the rotation angle.

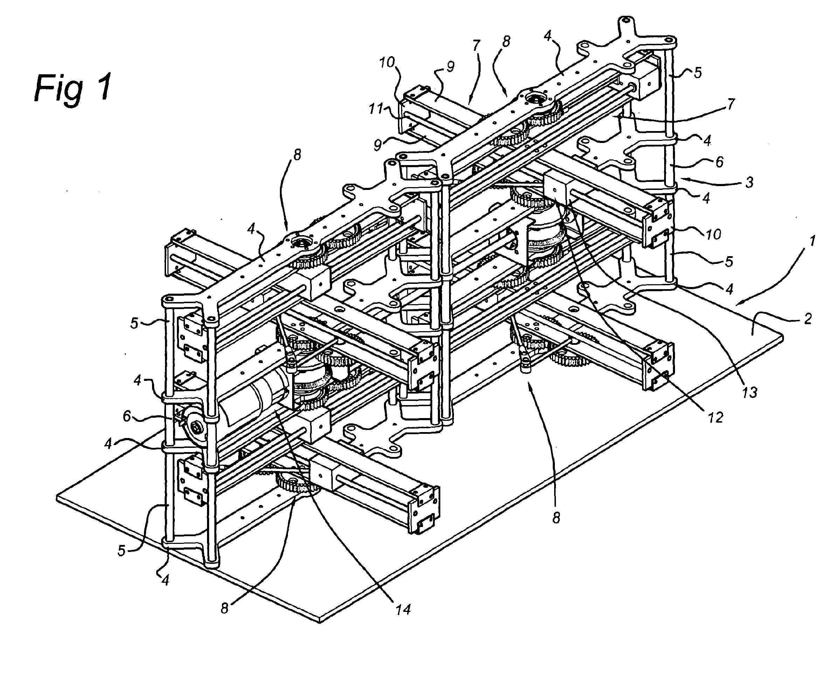

The device according to the invention as shown in figure 1 comprises a housing 1 provided with a base plate 2 and a frame structure 3 supported on the base plate 2. The main frame structure 3 consists of horizontal frame members 4 supported at a distance above each other by means of main columns 5 and auxiliary columns 6. Between each pair of horizontal frame members 4 and main columns 5, a set 8 consisting of two so-called inertia units 7 is rotatably supported. The inertia units 7 of each set 8 are interconnected as will be discussed below. Each inertia unit 7 consists, in the embodiment shown, of two parallel slats 9, which at the opposite ends are connected to each other by means of bulkheads 10. The bulkheads 10 carry each two shafts 11, over which shafts 11 a mass 12 is slidably guided. In this connection, each mass 12 comprises sliding bearings 13 for providing a smooth movement back and forth of the masses 12 with respect to the rods 11.

As shown in the figures, in each set 8 a lower slat 9 of an upper inertia unit 7 is connected to an upper slat 9 of a lower and inertia unit 7. Furthermore, the inertia units 7 of each set 8 are perpendicular only oriented with respect to each other having regard to the longitudinal extension of the rods 11 thereof. In the embodiment shown in figure 1, two of such sets 8 are superposed above each other by means of the auxiliary columns 6. Between two of such sets 8, drive means 14 are accommodated. These drive means 14 consist of an electric motor 15 connected to a torsion drive shaft 16 supported with respect to the horizontal frame members 4 by means of supports 17. Onto the drive shaft 16, drive gear wheels 18 are mounted, which drive gear wheels 18 each engage an upper driven gear wheel 19 and a lower driven material 20. The upper driven gear wheel 19 is connected to the upper set 8 of inertia units 7, and similarly the lower driven gear wheel 20 is connected to the lower set 8 of inertia units 7. As a result of this layout, the upper set of inertia units 8 rotates in the opposite sense in comparison to the lower set of inertia units 8. The sets 8 of inertia units 7 are connected by means of bearings 22 to the horizontal frame members.

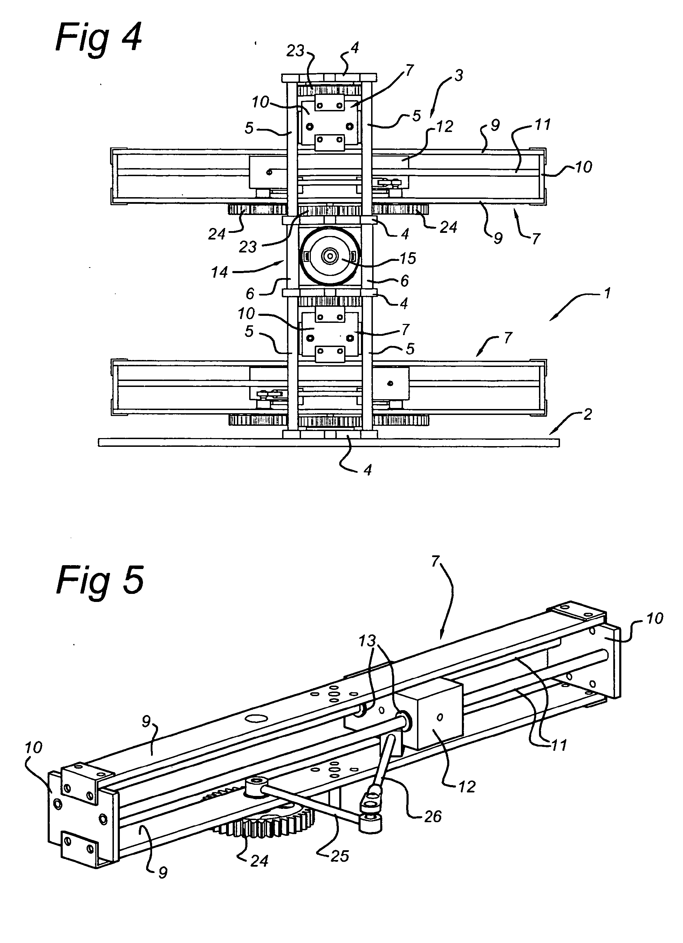

A fixed gear wheel 23 is connected to each horizontal frame member 4. In connection therewith, a rotatable gear wheel 24 which engages the corresponding fixed gear wheel 23, is rotatably connected to each slat 9. As shown in the figures, and in particular in figure 5, a crank 25 is fixedly connected to the rotatable gear wheel 24. The crank 25 in turn is connected to the drive shaft 20, the other end of which is connected to the mass 12.

By energising the electric motor 15, the sets 8 of inertia units 7 are brought into rotation, whereby an upper set 8 rotates in opposite direction in comparison to a lower set 8. As a result of the rotational movements of the inertia units 7, the rotatable gear wheels 24 are brought into rotation whereby the crank 25/drive shaft 26 mechanism moves the masses 12 back and forth over the guide rods 11. Moreover, the masses 12 are accelerated over the part of their movement from the bulkhead 10 to the axis 21; subsequently and directly adjoining this accelerating phase, the mass is decelerated when moving from the axis 21 to the opposite bulkhead 10. Thereby, the efficiency of the device according to the invention is enhanced.

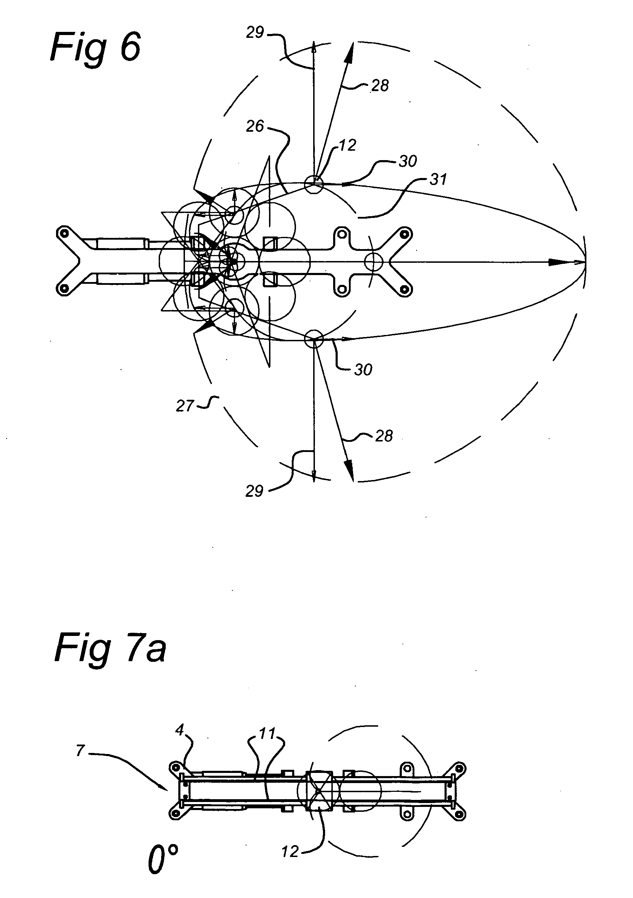

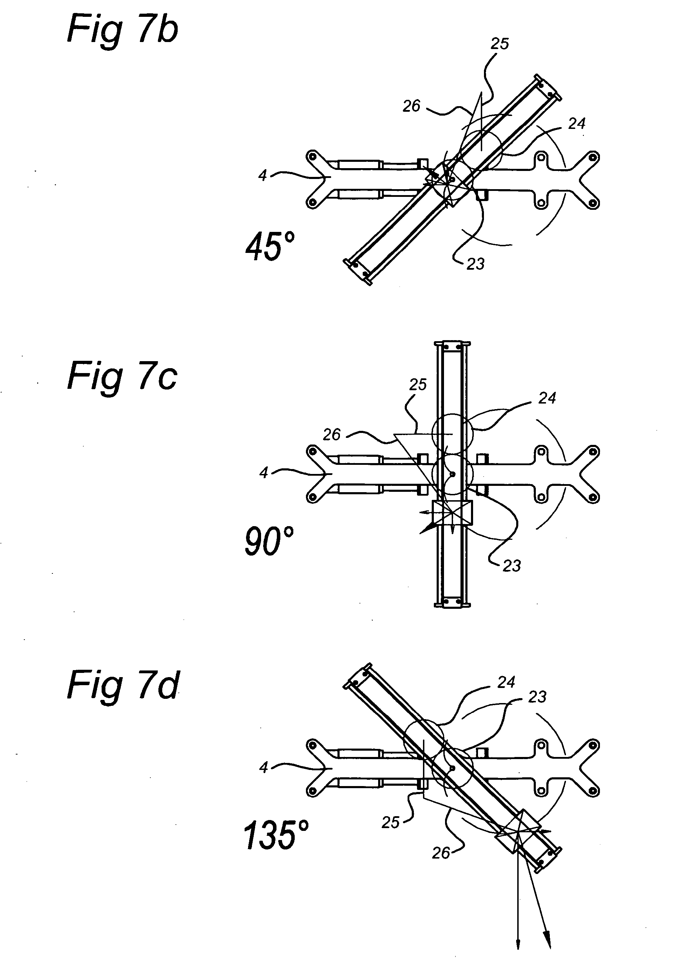

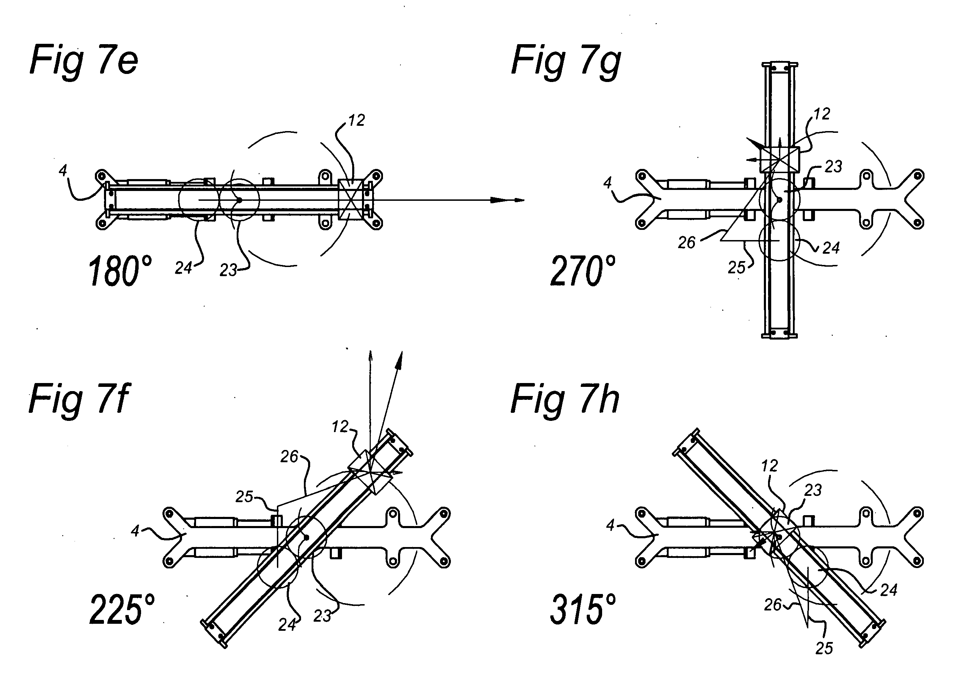

This increased efficiency is also clearly highlighted by the path of the force vector 28 of a single inertia unit 7 as shown in the figures 6 and 7. This force vector 28 has a lateral component 29 and a longitudinal component 30. As this clear from the preceding description of the device according to the invention, each time a set 8 of two inertia units 7 is applied, which the inertia units 7 rotate in opposite directions. This means that the lateral components 29 of the force vector 28 neutralize each other, while the longitudinal force component 30 of the force vector 28 are summarised. For clarity's sake, also the path 31 of the masses 12 corresponding to one of the inertia units is shown.

The figures 7a-h furthermore highlight concrete points of the movement of the inertia unit 7 while rotating over a full location of 360°, by steps of 45°. It will be clear that initially at a rotation of 0°, the mass 12 is at the axis of rotation 21, and while moving to a rotation of 45° is only slightly displaced towards the right in figure 7b, After moving over the rotation of 90° as shown in figure 7c, the mass 12 has moved back in longitudinal direction to the position of 0° rotation. Subsequently, an accelerated and large movement occurs towards the rotation of 135°, whereas at a rotation of 180° velocity the longitudinal direction has become zero and the maximum distance from the axis of rotation 21 has been obtained.

Subsequently, an accelerated movement in longitudinal direction of the mass 12 occurs in the opposite direction. The movement of the mass 12 is decelerated while rotating to the 270° position shown in figure 7f and further while moving to the 315° position shown in figure 7g. When moving further past the 315° position shown in figure 7h, the longitudinal velocity of the mass has almost become zero, while the zero velocity is obtained at the 0° position shown in figure 7a.

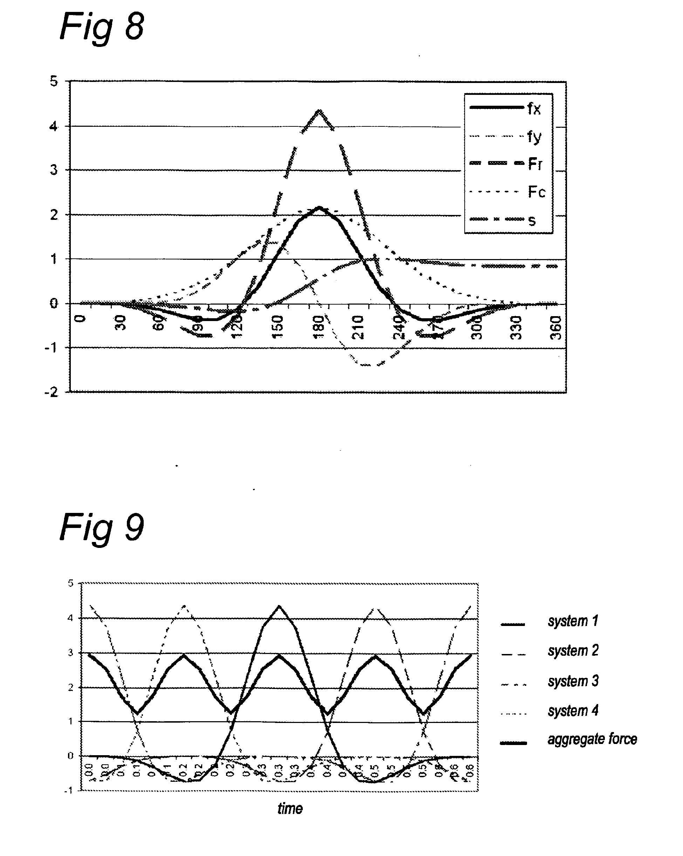

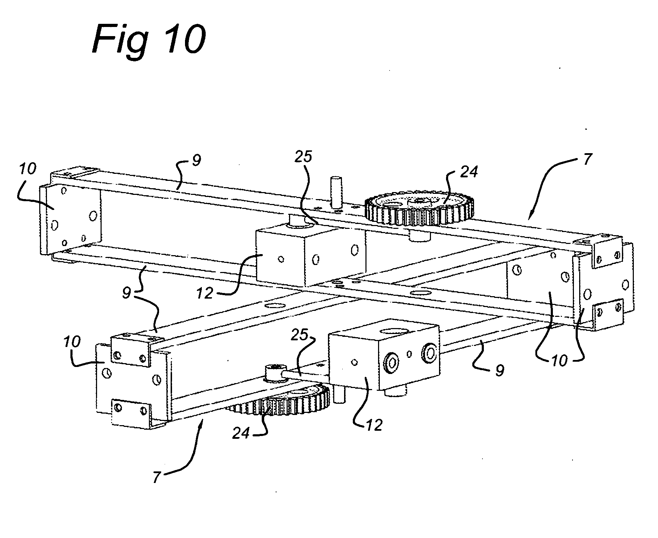

Figure 8 shows several properties of a set of two inertia units 7, interconnected at right angles. The resulting driving force Fr has a predominant positive phase between 120-240 degrees, with only slightly negative phases between 1-120 degrees and 240-360 degrees. Furthermore, in figure 8 Fc represents the centrifugal force, fx represents the longitudinal force, fy represents the lateral force and S represents the distance travelled.

The method and device as described before can be applied for many different purposes. For instance, the application can be carried out for driving a ship without using a screw propeller, for driving a car without using a drive train between the engine and the wheels, of for propelling aircraft or spacecraft. In the latter case, a particular application may take the form of steering rockets.

Additionally, as a result of the possibility to omit may moving components in the examples described before, fuel consumption can be reduced through increased overall efficiency. An estimated 30% energy saving is possible.

### List of references

1. Housing
2. Base plate
3. Frame structure
4. Horizontal frame member
5. Main column
6. Auxiliary column
7. Inertia unit
8. Set of two inertia units
9. Slat
10. Bulk head
11. Rod
12. Mass
13. Sliding bearing
14. Drive means
15. Electric motor
16. Torsion drive shaft
17. Drive shaft support
18. Drive gear wheel
19. Upper driven gear wheel
20. Lower driven gear wheel
21. Rotation axis
22. Bearing
23. Fixed gear wheel
24. Rotatable gear wheel
25. Crank
26. Drive shaft
27. Force vector path
28. Force vector
29. Lateral force component
30. Longitudinal force component
31. Path of mass

## Claims

1. Method for generating a force vector, comprising the steps of:
- providing at least a first mass (12) and a second mass (12),
- making the first mass (12) rotate around an axis of rotation (21),
- changing the distance between the first mass (12) and the axis of rotation (21) between two extreme positions while rotating the first mass (12),
- making the second mass (12) move around an axis of rotation (21),
- changing the distance between the second mass (12) and the axis of rotation (21) between extreme positions while rotating the second mass (12),
- making the masses (12) move in opposite direction with respect to each other,
- subjecting the masses (12) to a deceleration phase and a subsequent acceleration phase while changing the direction of movement of said masses (12) between the extreme positions,
- making each acceleration phase of said masses (12) directly adjoin a subsequent decelerating phase.
**characterised by**
- making the masses (12) move towards and from the axis of rotation by means of a respective crank/drive shaft mechanism (25, 26).

2. Method according to claim 1, comprising the step of:
- making the axes of rotation (21) of the first and second masses (12) coincide.

3. Method according to claim 1 or 2, comprising the step of:
- making the masses (12) move according to a path (31) which intersects the axis (21) of rotation.

4. Method according to any of the preceding claims, comprising the step of:
- making the masses (12) move according to paths (31) of similar shape (30).

5. Method according to any of the preceding claims, comprising the step of:
- making the masses (12) move according to paths (31) of similar dimensions.

6. Method according to any of the preceding claims, comprising the steps of:
- providing a drive source (15) for making the masses (12) rotate about the axis of rotation (21),
- synchronising the crank/drive shaft mechanism (25, 26) with the drive source (15).

7. Method according to any of the preceding claims, comprising the step of:
- guiding the masses (12) over a guide member (11) which extends radially with respect to the axis of rotation (21).

8. Device for generating a force vector by means of the method according to any of the preceding claims, comprising a main frame (3), at least two inertia units (7) which are rotatably supported with respect to the main frame (3), as well as main drive means (15-20) for rotating the inertia units (7), each inertia unit (7) comprising a subframe (9, 10), a mass (12) and auxiliary drive means (23-26) for displacing the masses (12) between extreme positions
wherein the auxiliary drive means (23-26) are carried out for subjecting the masses (12) to at least one accelerating phase and at least one subsequent decelerating phase which directly adjoins the at least one accelerating phase,
**characterised in that**
the main frame (3) comprises fixed auxiliary gear wheels (23) and the inertia units (7) each comprise a rotatable gear wheel (24) engaging a respective fixed gear wheel (23) of the main frame (3), a respective crank (25) being connected to said rotatable gear wheels (24), a respective mass (12) being drivingly connected to a corresponding crank (25) by means of a drive shaft (26).

9. Device according to claim 8, wherein the main drive means (15-20) are carried out for rotating the subframes (9, 10) in opposite directions with respect to each other.

10. Device according to claim 8 or 9, wherein the guide means (11) each intersect the axis of rotation (21).

11. Device according to claim 2 or 10, wherein each inertia unit (7) is provided with a respective driven gear wheel (19, 20), which driven gear wheels (19, 20) are coaxial with respect to the axis of rotation (21), a drive source (15) being provided which is drivingly connected to a drive gear wheel (18) the axis of rotation of which is perpendicular to the axis of rotation (21), said drive gear wheel (18) engaging both driven gear wheels (19, 20).

12. Device according to any of claims 8-11, wherein each inertia unit comprises a guide member (11) which extends radially with respect to the axis of rotation (21), each mass (12) being supported displaceably by said guide means (11).

13. Device according to any of claims 8-12, wherein multiple sets (8) of two inertia units (7) each are provided.

14. Device according to claim 13, wherein the sets (8) have a common axis of rotation (21).

15. Device according to claim 13 or 14, wherein the sets (8) have spaced, parallel axes of rotation (21).

## Patentansprüche

1. Verfahren zum Erzeugen eines Kraftvektors umfassend die Schritte:
- Bereitstellen wenigstens einer ersten Masse (12) und einer zweiten Masse (12),
- Bewirken, dass sich die erste Masse (12) um eine Drehachse (21) dreht,
- Verändern des Abstandes zwischen der ersten Masse (12) und der Drehachse (21) zwischen zwei Extrempositionen, während sich die erste Masse (12) dreht,
- Bewirken, dass sich die zweite Masse (12) um eine Drehachse (21) bewegt,
- Verändern des Abstandes zwischen der zweiten Masse (12) und der Drehachse (21) zwischen Extrempositionen, während sich die zweite Masse (12) dreht,
- Bewirken, dass sich die Massen (12) in entgegengesetzter Richtung in Bezug zueinander bewegen,
- Unterwerfen der Massen (12) einer Abbremsungsphase und einer nachfolgenden Beschleunigungsphase, während die Bewegungsrichtung der Massen (12) zwischen den Extrempositionen verändert wird,
- Bewirken, dass jede Beschleunigungsphase der Massen (12) direkt an eine nachfolgende Abbremsungsphase angrenzt,
**gekennzeichnet durch**
- Bewirken, dass sich die Massen (12) auf die Drehachse zu und davon weg mittels eines entsprechenden Kurbel/Antriebswellen-Mechanismus (25, 26) bewegen.

2. Verfahren nach Anspruch 1 umfassend den Schritt:
- Bewirken, dass die Drehachsen (21) der ersten und zweiten Massen (12) übereinstimmen.

3. Verfahren nach Anspruch 1 oder 2 umfassend den Schritt:
- Bewirken, dass sich die Massen (12) gemäß einem Pfad (31) bewegen, welcher die Drehachse (21) schneidet.

4. Verfahren nach einem der vorstehenden Ansprüche umfassend den Schritt:
- Bewirken, dass sich die Massen (12) gemäß Pfaden (31) ähnlicher Form (30) bewegen.

5. Verfahren nach einem der vorstehenden Ansprüche umfassend den Schritt:
- Bewirken, dass sich die Massen (12) gemäß Pfaden (31) ähnlicher Abmessungen bewegen.

6. Verfahren nach einem der vorstehenden Ansprüche umfassend die Schritte:
- Bereitstellen einer Antriebsquelle (15), um ein Drehen der Massen (12) um die Drehachse (21) zu bewirken,
- Synchronisieren des Kurbel/Antriebswellen-Mechanismus (25, 26) mit der Antriebsquelle (15).

7. Verfahren nach einem der vorstehenden Ansprüche umfassend den Schritt:
- Führen der Massen (12) über ein Führungselement (11), welches sich in Bezug auf die Drehachse (21) radial erstreckt.

8. Vorrichtung zum Erzeugen eines Kraftvektors mittels des Verfahrens nach einem der vorstehenden Ansprüche mit einem Hauptrahmen (3), wenigstens zwei Trägheitseinheiten (7), welche drehbar in Bezug auf den Hauptrahmen (3) gelagert sind, sowie einer Hauptantriebseinrichtung (15 - 20) zum Drehen der Trägheitseinheiten (7), wobei jede Trägheitseinheit (7) einen Unterrahmen (9, 10), eine Masse (12) und eine Hilfsantriebseinrichtung (23 - 26) zum Verschieben der Massen (12) zwischen Extrempositionen aufweist, wobei die Hilfsantriebseinrichtung (23 - 26) dafür ausgeführt ist, die Massen (12) wenigstens einer Beschleunigungsphase und wenigstens einer nachfolgenden Abbremsungsphase, welche direkt an die wenigstens eine Beschleunigungsphase anschließt, zu unterwerfen,
**dadurch gekennzeichnet, dass**
der Hauptrahmen (3) fixierte Hilfszahnräder (23) aufweist und die Trägheitseinheiten (7) jeweils ein mit einem entsprechenden fixierten Zahnrad (23) des Hauptrahmens (3) in Eingriff stehendes drehbares Zahnrad (24), eine mit den drehbaren Zahnrädern (24) verbundene entsprechende Kurbel (25) und eine antreibend mit einer entsprechenden Kurbel (25) einer Antriebswelle (26) verbundene entsprechende Masse (12) aufweisen.

9. Vorrichtung nach Anspruch 8, wobei die Hauptantriebseinrichtung (15 - 20) zum Drehen der Unterrahmen (9, 10) in entgegengesetzten Richtungen in Bezug zueinander ausgeführt ist.

10. Vorrichtung nach Anspruch 8 oder 9, wobei die Führungseinrichtung (11) jeweils die Drehachse (21) schneidet.

11. Vorrichtung nach Anspruch 9 oder 10, wobei jede Trägheitseinheit (7) mit einem entsprechenden angetriebenen Zahnrad (19, 20) versehen ist, wobei die angetriebenen Zahnräder (19, 20) in Bezug auf die Drehachse (21) koaxial sind, und eine Antriebsquelle (15) vorgesehen ist, welche antreibend mit einem Antriebszahnrad (18) verbunden ist, dessen Drehachse rechtwinklig zu der Drehachse (21) ist, wobei das Antriebszahnrad (18) mit beiden angetriebenen Zahnrädern (19, 20) in Eingriff steht.

12. Vorrichtung nach einem der Ansprüche 8 bis 11, wobei jede Trägheitseinheit ein Führungselement (11) aufweist, welches sich in Bezug auf die Drehachse (21) radial erstreckt, und wobei jede Masse (12) verschiebbar durch die Führungseinrichtung (11) gelagert ist.

13. Vorrichtung nach einem der Ansprüche 8 bis 12, wobei mehrere Sätze (8) von jeweils zwei Trägheitseinheiten (7) vorgesehen sind.

14. Vorrichtung nach Anspruch 13, wobei die Sätze (8) eine gemeinsame Drehachse (21) haben.

15. Vorrichtung nach Anspruch 13 oder 14, wobei die Sätze (8) in Abstand angeordnete parallele Drehachsen (21) haben.

## Revendications

1. Procédé pour générer un vecteur de force, comprenant les étapes consistant à :
- fournir au moins une première masse (12) et une seconde masse (12),
- faire en sorte que la première masse (12) tourne autour d'un axe de rotation (21),
- changer la distance entre la première masse (12) et l'axe de rotation (21) entre deux positions extrêmes tout en faisant tourner la première masse (12),
- faire en sorte que la seconde masse (12) se déplace autour d'un axe de rotation (21),
- changer la distance entre la seconde masse (12) et l'axe de rotation (21) entre des positions extrêmes tout en faisant tourner la seconde masse (12),
- faire en sorte que les masses (12) se déplacent dans des directions opposées l'une par rapport à l'autre,
- soumettre les masses (12) à une phase de décélération et à une phase d'accélération suivante tout en changeant la direction de mouvement desdites masses (12) entre les positions extrêmes
- faire en sorte que chaque phase d'accélération desdites masses (12) soit directement contiguë à une phase de décélération suivante,
**caractérisé par** l'étape consistant à :
- faire en sorte que les masses (12) se déplacent vers et à partir de l'axe de rotation au moyen d'un mécanisme respectif de manivelle/d'arbre d'entraînement (25, 26).

2. Procédé selon la revendication 1, comprenant l'étape consistant à :
- faire en sorte que les axes de rotation (21) des première et seconde masses (12) coïncident.

3. Procédé selon la revendication 1 ou 2, comprenant l'étape consistant à :
- faire en sorte que les masses (12) se déplacent selon un trajet (31) qui croise l'axe (21) de rotation.

4. Procédé selon une quelconque des revendications précédentes, comprenant l'étape consistant à :
- faire en sorte que les masses (12) se déplacent selon des trajets (31) de forme similaire (30).

5. Procédé selon une quelconque des revendications précédentes, comprenant l'étape consistant à :
- faire en sorte que les masses (12) se déplacent selon des trajets (31) de dimensions similaires.

6. Procédé selon une quelconque des revendications précédentes, comprenant les étapes consistant à :
- fournir une source d'entraînement (15) pour faire en sorte que les masses (12) tournent autour de l'axe de rotation (21),
- synchroniser le mécanisme de manivelle/arbre d'entraînement (25, 26) avec la source d'entraînement (15).

7. Procédé selon une quelconque des revendications précédentes, comprenant l'étape consistant à :
- guider les masses (12) sur un élément de guidage (11) qui s'étend de façon radiale par rapport à l'axe de rotation (21).

8. Dispositif pour générer un vecteur de force au moyen du procédé selon une quelconque des revendications précédentes, comprenant un cadre principal (3), au moins deux unités d'inertie (7) qui sont supportées de façon rotative par rapport au cadre principal (3), ainsi que des moyens d'entraînement principaux (15 à 20) pour faire tourner les unités d'inertie (7), chaque unité d'inertie (7) comprenant un sous-cadre (9, 10), une masse (12) et des moyens d'entraînement auxiliaires (23 à 26) pour déplacer les masses (12) entre des positions extrêmes, dans lequel les moyens d'entraînement auxiliaires (23 à 26) sont réalisées pour soumettre les masses (12) à au moins une phase d'accélération et au moins une phase de décélération suivante qui est directement contiguë à l'au moins une phase d'accélération,
**caractérisé en ce que**
le cadre principal (3) comprend des roues dentées auxiliaires fixes (23) et les unités d'inertie (7) comprennent chacune une roue dentées rotative (24) entrant en prise avec une roue dentée fixe respective (23) du cadre principal (3), une manivelle respective (25) étant reliée auxdites roues dentées rotatives (24), une masse respective (12) étant reliée de façon entraînante à une manivelle correspondante (25) au moyen d'un arbre d'entraînement (26).

9. Dispositif selon la revendication 8, dans lequel les moyens d'entraînement principaux (15 à 20) sont réalisés pour faire tourner les sous-cadres (9, 10) dans des directions opposées l'un par rapport à l'autre.

10. Dispositif selon la revendication 8 ou 9, dans lequel les moyens de guidages (11) croisent chacun l'axe de rotation (21).

11. Dispositif selon la revendication 9 ou 10, dans lequel chaque unité d'inertie (7) est pourvue d'une roue dentée menée respective (19, 20), lesquelles roues dentées menées (19, 20) sont coaxiales par rapport à l'axe de rotation (21), une source d'entraînement (15) étant prévue qui est reliée de façon entraînante à une roue dentée menante (18) dont l'axe de rotation est perpendiculaire à l'axe de rotation (21), ladite roue dentée menante (18) entrant en prise avec les deux roues dentées menées (19, 20).

12. Dispositif selon une quelconque des revendications 8 à 11, dans lequel chaque unité d'inertie comprend un élément de guidage (11) qui s'étend de façon radiale par rapport à l'axe de rotation (21), chaque masse (12) étant supportée de façon déplaçable par lesdits moyens de guidage (11).

13. Dispositif selon une quelconque des revendications 8 à 12, dans lequel de multiples jeux (8) de deux unités d'inertie (7) chacun sont prévus.

14. Dispositif selon la revendication 13, dans lequel les jeux (8) possèdent un axe de rotation commun (21).

15. Dispositif selon la revendication 13 ou 14, dans lequel les jeux (8) comportent des axes de rotation espacés et parallèles (21).
